## Europäisches Patentamt
## European Patent Office
## Office européen des brevets

(19)

(11) Numéro de publication: **0 030 504**
**B1**

(12)

# FASCICULE DE BREVET EUROPEEN

(45) Date de publication du fascicule du brevet:
**03.07.85**

(51) Int. Cl.⁴: **G 06 F 15/16, G 06 F 9/46**

(21) Numéro de dépôt: **80401742.4**

(22) Date de dépôt: **05.12.80**

(54) **Dispositif de synchronisation et d'affectation de processus entre plusieurs processeurs dans un système de traitement de l'information.**

(30) Priorité: **11.12.79 FR 7930332**

(43) Date de publication de la demande:
**17.06.81 Bulletin 81/24**

(45) Mention de la délivrance du brevet:
**03.07.85 Bulletin 85/27**

(84) Etats contractants désignés:
**DE FR GB IT NL**

(56) Documents cités:
**FR - A - 2 208 553**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Bourrez, Jean Marie, CII HONEYWELL BULL 94, avenue Gambetta, F-75960 Paris Cedex 20 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne un système de synchronisation et d'affectation de processus entre plusieurs processeurs dans un système de traitement de l'information.

Elle concerne plus particulièrement un système de traitement de l'information comportant plusieurs processeurs individuels et une mémoire centrale à laquelle chaque processeur est connectable par un système de voies de transmission d'information dénommé «bus», la liaison entre chaque processeur et la mémoire centrale s'effectuant sans passer par l'intermédiaire d'un autre processeur, et des moyens associés au bus pour connecter sélectivement une unité de traitement à la mémoire centrale.

Par processus on entend un programme, composé d'une suite ordonnée d'instructions et d'un ensemble de données associées à ces instructions, exécutable par une machine de traitement de l'information pour effectuer un travail commandé par un utilisateur.

Un processus est exécutable par un processeur. Le processeur est un dispositif matériel appartenant au système de traitement de l'information apte à commander l'exécution des instructions propres au processus et à traiter les données associées à ces processus.

Lorsqu'un grand nombre de processus sollicitent simultanément un même processeur la gestion des priorités d'exécution de ces processus ainsi que la communication des processus relèvent d'une extrême complexité. On connait toutefois des systèmes de traitement de l'information dans lesquels ces problèmes ont été résolus. Une solution à ces problèmes est décrite dans les brevets français N° 2 253 419 et 2 253 417 ayant respectivement pour titre «Système de gestion de processus pour processeur de données» et «Synchronisation de processus utilisant des sémaphores» et appartenant à la demanderesse. Toutefois, le développement des unités de calcul à grande intégration utilisant les techniques LSI (abréviation du terme anglo-saxon Large Scale Integration) favorisent le développement des systèmes de traitement de l'information associant pour leur fonctionnement plusieurs processeurs. Le problème qui se pose alors naturellement est celui de l'allocation des processus aux processeurs de ces systèmes.

Le document FR 2 208 553 décrit un tel système «multi-processeur» dans lequel cette allocation est déterminée une fois pour toutes.

Par contre l'invention propose un système dans lequel cette allocation varie selon la configuration, l'état ou l'utilisation du système.

L'allocation des processus aux processeurs est une opération qui prend du temps et qui peut être d'une complexité variable suivant les algorithmes de choix qui sont employés.

Plus les algorithmes de choix sont compliqués et plus il y a de risque de perturbation des tables renfermant les paramètres vitaux pour le fonctionnement du système.

La présente invention, telle qu'elle est caractérisée dans les revendications, a donc pour objet un dispositif pour allouer des processus à des processeurs qui possèdent de très bonnes performances avec un degré de complexité moyen.

Un autre objet de l'invention est un dispositif permettant d'étendre à un système comprenant plusieurs processeurs l'application des concepts utilisés dans les systèmes à plusieurs processus s'exécutant sur un seul processeur tels qu'ils sont décrits dans les brevets français précités.

Selon l'invention, la fonction d'allocation des processus aux processeurs que doit remplir le dispositif et qui sera par la suite désigné par «dispatcher» s'exécute en deux phases, la première phase appelée SELECT consiste à affecter les processeurs réels aux processus candidats, la deuxième phase appelée EXEC consiste à procéder pour chaque processeur réel sélectionné, au vidage du contexte du processus en cours pour le remplacer par celui du nouveau processus.

Selon l'invention l'appel du «dispatcher» est déclenché lorsqu'un changement a lieu dans l'état des processus qui sont en attente d'une exécution ou dans l'état des processeurs en fonctionnement, cet appel est provoqué par le processeur dans lequel un changement a été opéré.

La présente invention sera mieux comprise à l'aide de la description faite au regard des dessins qui va suivre.

La fig. 1 représente la composition d'un système de traitement de l'information conforme à l'invention.

La fig. 2 représente le format d'un bloc de commande de processus.

Les figs 3A et 3B montrent une représentation des dispositifs matériels dont chaque processeur doit disposer pour permettre l'allocation des processus aux différents processeurs.

La fig. 3C montre une représentation des dispositifs matériels à insérer dans l'unité de commande de mémoire pour réaliser l'allocation des processus aux différents processeurs.

La fig. 4 représente le format d'un élément de table d'état des processeurs mémorisée en mémoire centrale.

La fig. 5 montre une organisation en mémoire centrale d'une file d'attente de processus prêts à l'exécution.

La fig. 6 montre le format d'un lien de processus permettant d'enchaîner les processus prêts à l'exécution.

Les figs 7A et 7B représentent sous forme d'organigramme les phases du déroulement du microprogramme mis en œuvre pour exécuter l'opération SELECT.

Les figs 8A à 8C représentent sous forme d'organigramme les phases du déroulement du microprogramme mis en œuvre pour exécuter l'opération EXEC.

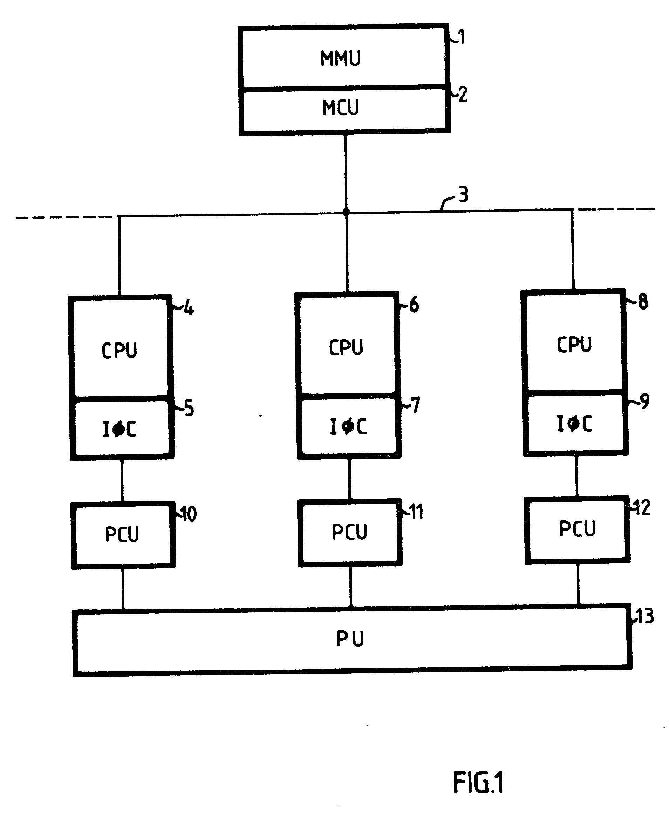

Le système de traitement de l'information représenté à la fig. 1 comprend une mémoire vive principale $MMU_1$ commandée à partir d'une unité de commande de mémoire 2. Il comprend aussi une pluralité d'unités centrales de traitement ou processeurs 4, 6, 8 etc. reliées ensemble par un bus unique 3 à l'entrée de la mémoire de commande 2. Le bus 3 transporte les mots d'adresse de données et de commande entre l'unité de commande 2 et l'ensemble des processeurs.

Chaque processeur 4, 6 et 8 est relié respectivement à une unité de commande de périphérique PCU 10, 11 et 12 au travers respectivement des contrôleurs d'entrée-sortie IOC 5, 7 et 9. Les unités de commande de périphérique sont connectées aux diverses unités périphériques PU 13 composant le système. La mémoire MMU$_1$ contient à tout instant plusieurs processus qui sont susceptibles d'être exécutés par les processeurs de la fig. 1.

Comme il a été dit précédemment un processus est défini comme une suite ordonnée d'instructions qui peuvent être exécutées de façon asynchrone par chaque processeur. Un processus peut être en exécution sur un processeur particulier, mais il peut à tout instant abandonner la commande du processeur sur lequel il s'exécute et laisser la commande du processeur à un autre processus.

Lorsqu'un processus quitte la commande du processeur son état ou contexte doit être préservé dans une zone de mémoire appropriée.

L'état du processus ainsi conservé pourra être utilisé pour conditionner préalablement un processeur avant que le processus interrompu reprenne la commande de ce processeur.

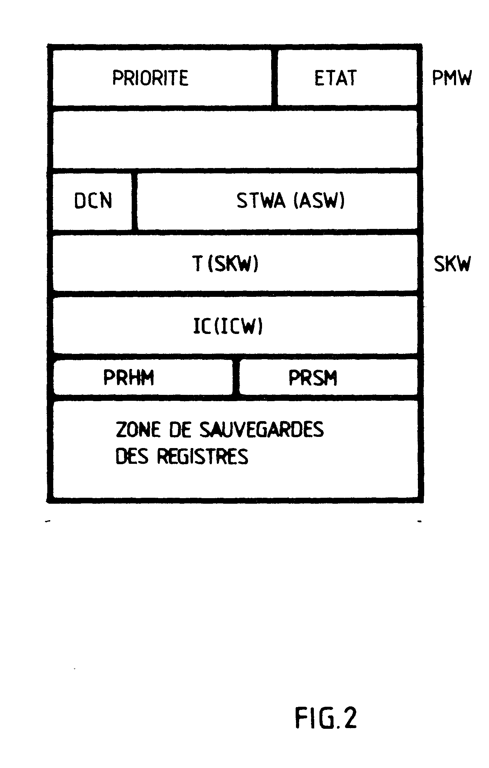

La zone de mémoire attribuée à un processus est appelée bloc de commande de processus (PCB) et est représentée à la fig. 2. Un bloc de commande de processus est partagé en plusieurs zones. La zone marquée «priorité» définit le niveau de priorité que possède le processus. La zone marquée «Etat» définit l'état du processus. Ces états peuvent signifier que le processus a été suspendu, qu'il n'a jamais été démarré, qu'il est en file d'attente avec d'autres processus prêts à l'exécution, qu'il est en file d'attente sur un sémaphore ou qu'il est en train d'être exécuté par un processeur. La zone marquée DCN indique le décor avec lequel le processus peut être exécuté, chaque système informatique a en effet une architecture fonctionnelle qui lui est propre et un processus ne peut être exécuté qu'avec un décor particulier.

Si le décor correspondant au DCN du processus n'existe pas dans le système le PCB est considéré comme illégal. La zone STWA ou (ASW) identifie l'adresse de début d'une table d'adresse du segment et sert à l'obtention de l'adresse du descripteur de segment affecté au processus. La zone (SKW) contient la valeur du registre pointeur T du sommet d'une pile résidante dans un segment de pile. Le mot contenu dans cette zone contient la valeur du sommet du registre de pile lorsque le processus n'est pas en exécution, il est mis à jour toutes les fois que le processus quitte l'état d'exécution, il est utilisé pour mettre à jour le contenu du registre T réel d'un processeur chaque fois que le processus passe en exécution sur ce processeur. La zone (ICW) contient la valeur du compteur d'instruction du processeur qui existait au moment où l'exécution du processus a été arrêtée sur ce processeur. Cette zone est mise à jour chaque fois que le processus quitte l'état d'exécution, elle est utilisée chaque fois que le processus repasse en exécution pour mettre à jour le compteur d'instructions du processeur sur lequel le processus doit être exécuté. Les zones marquées PRHM et PRSM sont utilisées en tant que masque. La position de chaque bit de ces zones désigne un processeur particulier du système. Une position de bit à zéro signifie que le processus peut être exécuté sur le processeur correspondant à cette position et un bit à 1 signifie qu'il ne le peut pas. Le PCB peut voir d'autres zones pour notamment sauvegarder le contenu de certains registres du processeur lorsque le processus est en exécution sur ces registres et qu'une interruption vient l'interrompre. Le bloc de processus peut contenir d'autres informations. On pourra pour plus de détail se reporter aux descriptions de blocs similaires dans les brevets de la demanderesse précédemment référencés.

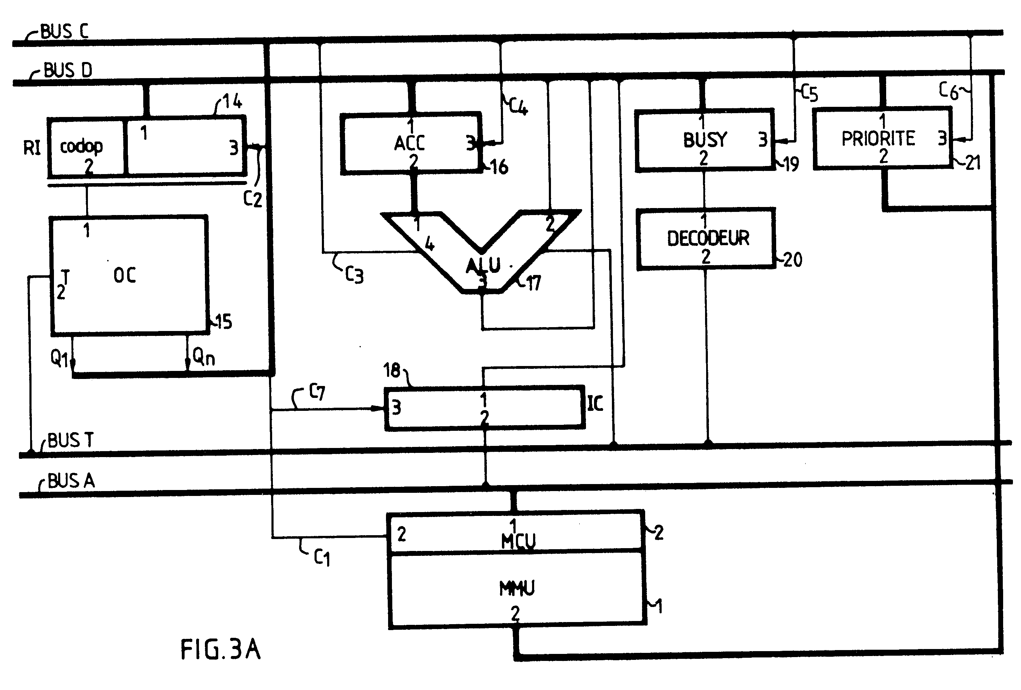

Les figs 3A à 3C montrent une représentation des éléments matériels dont doit être muni chaque processeur pour permettre l'allocation des processus aux différents processeurs.

La fig. 3A représente des éléments constituant une structure traditionnelle d'une unité centrale de traitement de l'information et qui est adaptée ici pour mettre en œuvre le dispositif de l'invention. Pour plus de détails sur ces structures, on pourra se reporter au livre de Samir S. HUSSON intitulé «Microprogramming principles and practices» édité par les éditions Prentice Hall-Copyright 70.

Le dispositif représenté à la fig. 3A comprend une mémoire MMU$_1$, une unité de commande 2 de la mémoire MMU$_1$, un organe de commande OC 15, un registre d'instruction RI$_{14}$, une unité arithmétique logique ALU$_{17}$, un registre accumulateur ACCU$_{16}$, un registre BUSY 19, un décodeur 20, un registre de priorité 21 et un compteur d'instruction IC 18. Ces différents éléments sont reliés entre eux par l'intermédiaire des lignes référencées par BUS A, BUS C, BUS D et BUS T. Le BUS A relie l'entrée 1 de l'unité de commande 2 à la sortie 2 du compteur d'instruction IC 18. Le compteur d'instruction 18 contient l'adresse de l'instruction qui est en cours d'exécution. Les données et instructions lues dans la mémoire MMU$_1$ ou écrites dans cette mémoire sont transportées sur le BUS D reliant la borne 2 de la mémoire MMU$_1$ à l'entrée 1 du registre d'instruction RI$_{14}$, à l'entrée 1 du registre d'instruction RI$_{14}$, à l'entrée 1 du registre accumulateur ACC 16, à l'entrée 1 du registre BUSY 19; à l'entrée 1 et à la sortie 2 du registre de priorité 27 et à l'entrée 2 de l'unité arithmétique. Le registre d'instruction RI$_{14}$ est relié par sa sortie 2 à l'entrée 1 de l'organe de commande 15. L'organe de commande 15 a une structure microprogrammée du type de celle décrite page 491 à 500 du livre de Samir S. HUSSON déjà cité.

L'organe de commande est relié sur son entrée 2 au bus de test BUST et reçoit ainsi des résultats de test émis par l'ensemble des dispositifs de test du processeur. L'organe de commande peut donc en fonction du type d'instructions qui doit être exécuté et des résultats de tests particuliers, exécuter des branchements sur des adresses de début de microprogrammes inscrits dans l'organe de commandes. L'exécution de ces microprogrammes génère des commandes particulières sur le BUS C relié aux sorties $Q_1$ à $Q_n$ de l'organe de commande.

La sortie 2 du registre accumulateur ACC 16 relie l'entrée 1 de l'unité arithmétique logique 17. L'unité arithmétique 17 effectue des opérations arithmétique et logique sur deux opérandes, le $1^{er}$ opérande est contenu dans le registre accumulateur 16 et le $2^e$ opérande apparaît sur le BUS D. Le résultat du calcul effectué sur ces deux opérandes est retransmis sur le BUS D dans l'accumulateur ou en direction d'un autre registre. La sortie 2 du registre BUSY est reliée à l'entrée 1 du décodeur 20 dont la sortie est reliée au BUS T. L'organe de commande OC 15 génère les signaux de commande $C_1$ à $C_7$ respectivement sur l'entrée 2 de l'unité de commande de mémoire MCU 2, sur l'entrée 3 du registre d'instruction RI 14, sur l'entrée 4 de l'unité arithméthique logique ALU 17, sur l'entrée 3 du registre accumulateur ACC 16, sur l'entrée 3 du registre BUSY, sur l'entrée 3 du registre de priorité 21 et sur l'entrée 3 du compteur d'instruction IC 18.

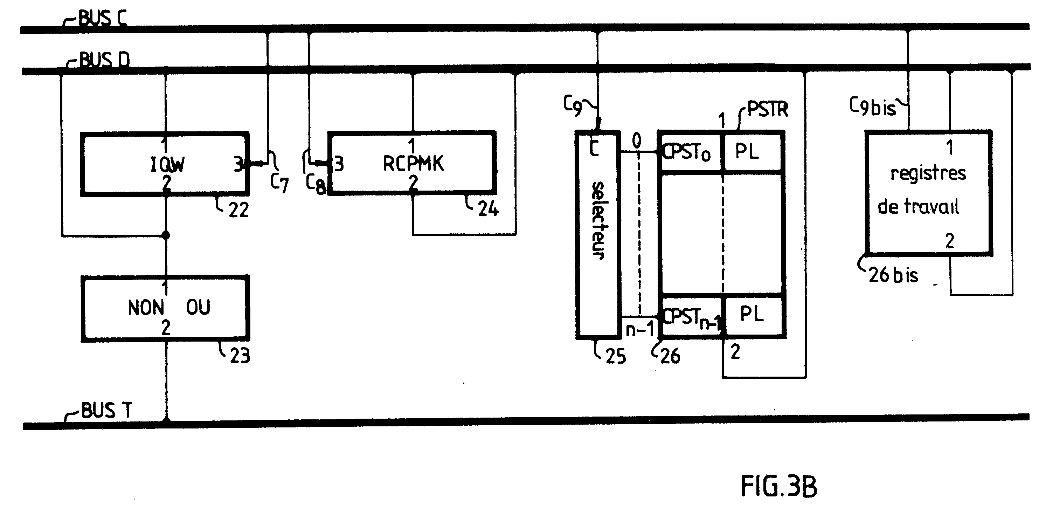

Les circuits représentés à la fig. 3B sont organisés autour des bus de commande (BUS C), du bus de données (BUS D) et d'un bus de test (BUS T). Le bus de données (BUS D) relie ensemble l'entrée 1 du registre IQW 22, l'entrée 1 du registre RCPMK et l'entrée 1 d'un banc de registre PSTR 26, ainsi que les sorties 2 des registres IQW 22, RCPMK 24 et PSTR 26. Le conducteur de commande $C_7$ du registre IQW relie l'entrée 3 de ce registre au bus de commande.

Le bus de commande BUS C est relié à l'entrée 3 du registre CPMK par le conducteur de commande $C_8$ et à l'entrée C du sélecteur 25 par le conducteur de commande $C_9$. Le sélecteur 25 commandé par la liaison $C_9$ assure la sélection des n registres du banc de registre PSTR 26. La sortie 2 du registre IQW 22 est reliée au bus de test (BUST) au travers du circuit NON OU 23. Les circuits de la fig. 3B comprennent en plus un ensemble de registres de travail 26bis classiquement connectés au bus de données BUS D et commandés par la liaison de commande $C_9$bis.

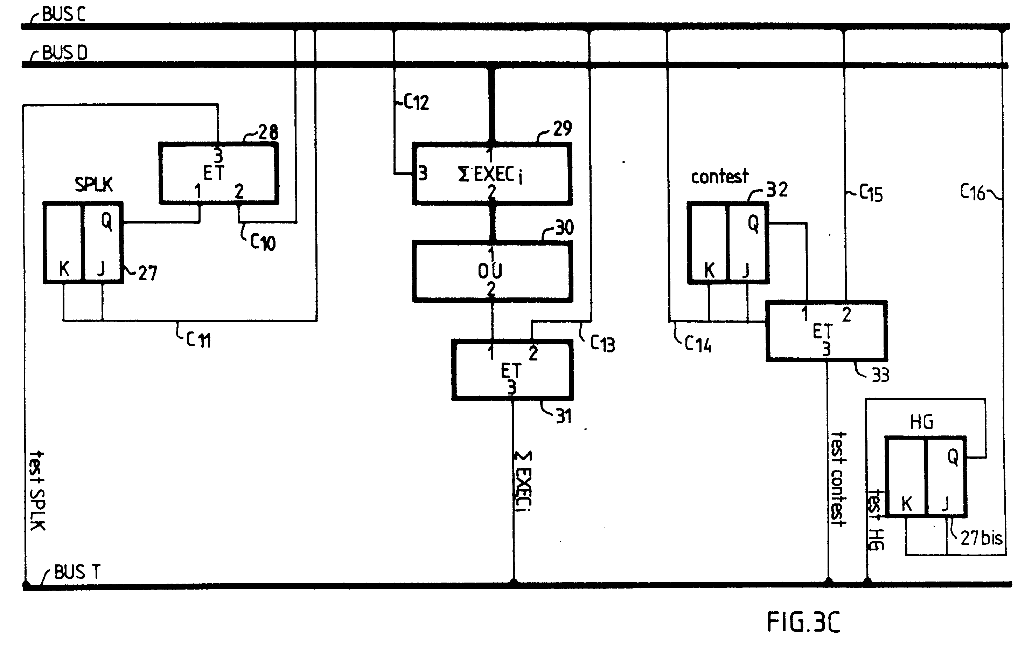

Les circuits représentés à la fig. 3C comprennent un basculeur SPLK 27, un compteur $\Sigma EXEC_i$ 29 et un basculeur 32 organisés comme précédemment autour des bus C D et T.

Le basculeur SPLK 27 est commandé sur ses entrées J et K par les signaux de commande venant du BUS C sur la liaison $C_{11}$. La sortie Q du basculeur SPLK est reliée à l'entrée 1 d'une porte ET 28 dont l'entrée est commandée par un signal venant du BUS C sur la liaison $C_{10}$. La porte ET 28 permet ainsi d'effectuer un test sur l'état de la bascule SPLK. Le compteur $\Sigma EXEC_i$ 29 est relié sur son entrée 1 au bus D pour être chargé à une valeur initiale, il est commandé les signaux émis par le BUS C sur la liaison $C_{12}$ connectant le bus C à sa borne 3. La sortie 2 du compteur 29 est reliée à l'entrée 1 d'un circuit OU 30 dont la sortie 2 est reliée à l'entrée 1 d'une porte ET 31 commandée sur son entrée 2 par les signaux émis par le BUS C sur la liaison $C_{13}$ reliant l'entrée 2 au BUS C. La sortie 3 de la porte ET 31 est reliée au BUS T. La porte ET 31 permet le test de l'état du compteur 29 lorsqu'elle est commandée sur la liaison $C_{13}$. Le basculeur CONTEST 32 est commandé sur ses entrées J et K par les signaux de commande venant du BUS C sur la liaison $C_{14}$. La sortie Q du basculeur 32 est reliée à l'entrée 1 d'une porte ET 33 dont l'entrée 2 reçoit un signal de commande émis par le BUS C sur la liaison $C_{15}$ reliant la porte ET 33 au bus C. La sortie 3 de la porte ET 33 est reliée au BUS T. La porte ET 33 permet le test de la sortie Q du basculeur CONTEST 32. Les circuits de la fig. 3C comprennent en outre un basculeur HG 27bis commandé par la liaison $C_{16}$ sur ses entrées J et K, sa sortie Q étant connectée directement au BUS T. La fonctionnalité des éléments montrés sur la fig. 3C est la suivante. Les basculeurs SPLK et HG sont utilisés comme verrous du système pour protéger des sémaphores, des files d'attente de processus, en attente sur des sémaphores, des files d'attente de processus en attente d'exécution pour permettre la mise à jour de l'état des différents processeurs du système ou des processus candidats à l'exécution dans le système.

Le basculeur CONTEST est mis à «un» logique pour toute opération qui occasionne un changement dans la file d'attente des processus en attente d'exécution. Ce changement peut être provoqué par l'apport d'un autre processus dans la file d'attente, le retrait d'un processus ou la modification de l'ordre des processus en attente. L'état du compteur $\Sigma EXEC_i$ permet de vérifier que toutes les opérations d'affectation des processus aux processeurs sont terminées. Ce compteur est incrémenté d'une unité à chaque fois que durant l'opération SELECT un processeur est désigné comme devant être affecté à un processus. Il est décrémenté d'une unité à chaque fois qu'une affectation est terminée.

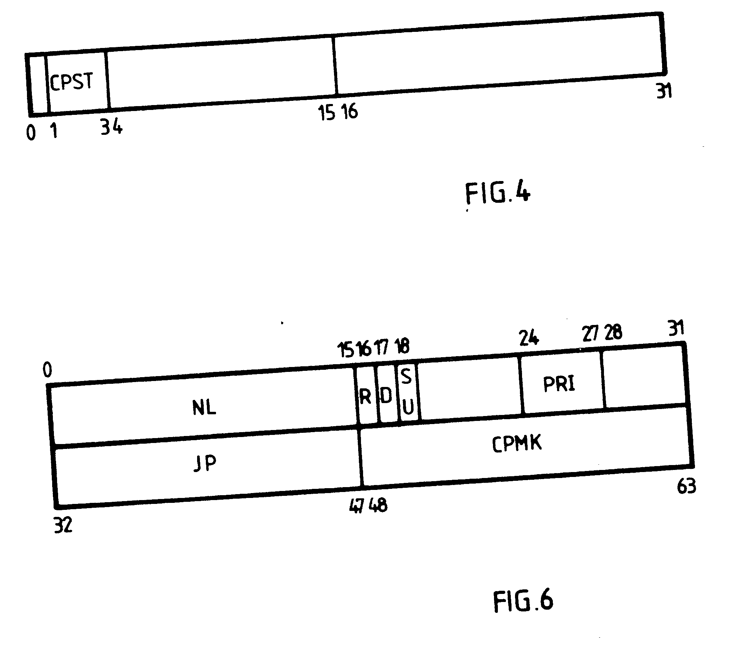

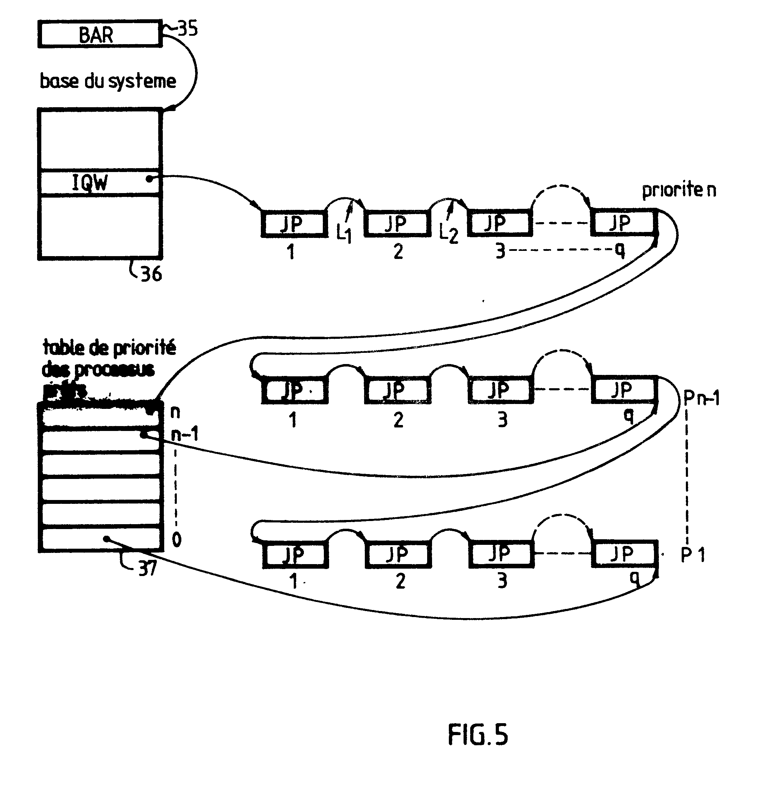

L'affectation des processus aux processeurs, s'effectue à l'aide d'une table CPSTT située dans la mémoire $MMU_1$, qui garde en mémoire l'état présent des processeurs dans le système. L'état de chaque processeur est signalé dans cette table à l'aide d'un mot d'état dont le format est montré à la fig. 4. Sur cette figure le champ d'informations CPST qui occupe les positions de bits allant du bit 1 sur une longueur de 3 peut avoir l'une des significations suivantes:

CPST = 000 signifie que le processeur n'existe pas dans la configuration du système.

CPST = 001 signifie que le processeur est indisponible.

CPST = 010 signifie que le processeur est vacant. Dans cet état, le processeur peut exécuter des processus mais il n'est pas en train de le faire.

CPST = 011 signifie que le processeur est en train d'exécuter un processus.

Le champ de bits allant du bit 16 sur une longueur de 16 indique l'adresse d'un segment $G_0$ situé dans la mémoire $MMU_1$ dont le rôle sera ci-après explicité. La nature et la fonction d'un segment $G_0$ sont décrites dans les brevets précités de la demanderesse.

Les processus prêts à l'exécution sont chaînés dans la mémoire $MMU_1$ de la façon représentée à la fig. 5. Les processus repérés par le nom JP sont répartis dans des files d'attente en fonction du niveau de priorité requis pour leur exécution. La fig. 5 montre n files d'attente correspondant à n niveaux de priorité. Dans chaque niveau, les processus sont reliés entre eux par des liens qui permettent à partir de chaque processus de connaître le processus suivant qui s'y trouve relié. Le dernier processus enchaîné sur un niveau de priorité comporte un lien qui le relie au processus de tête de la file d'attente des processus de niveau de priorité plus bas. Le processus en tête de la file d'attente de niveau de priorité le plus élevé est repéré par un pointeur IQW situé dans une zone de la mémoire $MMU_1$ appelée base du système. Cette zone est déceloppée par microprogrammation et est accessible par l'intermédiaire du registre d'adresse de base B AR 35 qui fait partie lui-même d'une zone fixe de la mémoire $MMU_1$ pour faciliter la gestion des files d'attente représentées à la fig. 5, il est prévu dans la mémoire $MMU_1$ une table de priorité donnant l'adresse de chaque processus dernier d'une file d'attente dans chaque niveau de priorité.

La gestion des files d'attente est un problème bien connu en programmation, signalons toutefois qu'une solution à ce problème est décrite dans les brevets déjà précités apartenant à la demanderesse.

La fig. 6 montre le format d'un lien de processus utilisé dans l'invention. Les bits 0 à 15 fournissent l'adresse du lien de processus suivant dans la file d'attente. Le bit 16 ou bit R est placé à un logique lorsque le processus part en exécution. Le bit 17 ou bit D est utilisé pour des besoins de synchronisation. Le bit 18 ou bit SU est utilisé à des fins de synchronisation. Lorsque l'état logique du bit SU = 1 il signifie que le processus a été suspendu et qu'il ne peut être utilisé par un processeur. Les bits 24 à 27 ou PRI indiquent la priorité du processus. Les bits 32 à 47 ou JP représentent le nom du processus correspondant au lien. Les bits 48 à 63 représentent un masque de processeur. Chaque bit de ce champ correspond à un processeur, on pourra donc d'après la fig. 5 affecter jusqu'à 16 processeurs. Chaque bit à zéro indique d'après son rang le numéro du processeur sur lequel le processus peut être lancé. Le masque CPMK est construit à partir du décor auquel le processus appartient, des états des processeurs lus dans la table CPSTT des processeurs et du masque PRSM trouvé dans chaque PCB. Ce masque est calculé par exemple lorsque l'instruction de démarrage d'un processus est exécutée «START PROCESS», lorsque le processus est extrait d'une file d'attente sur sémaphore.

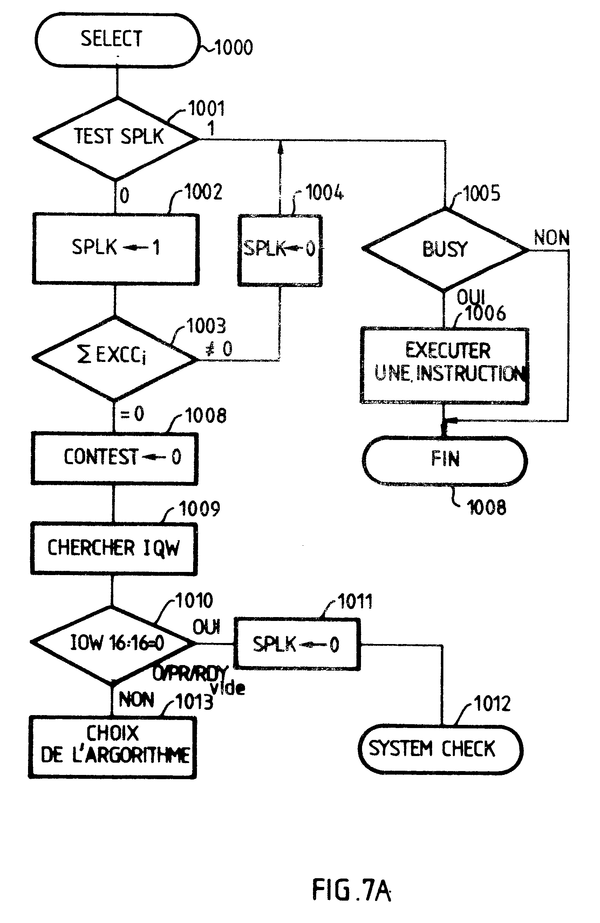

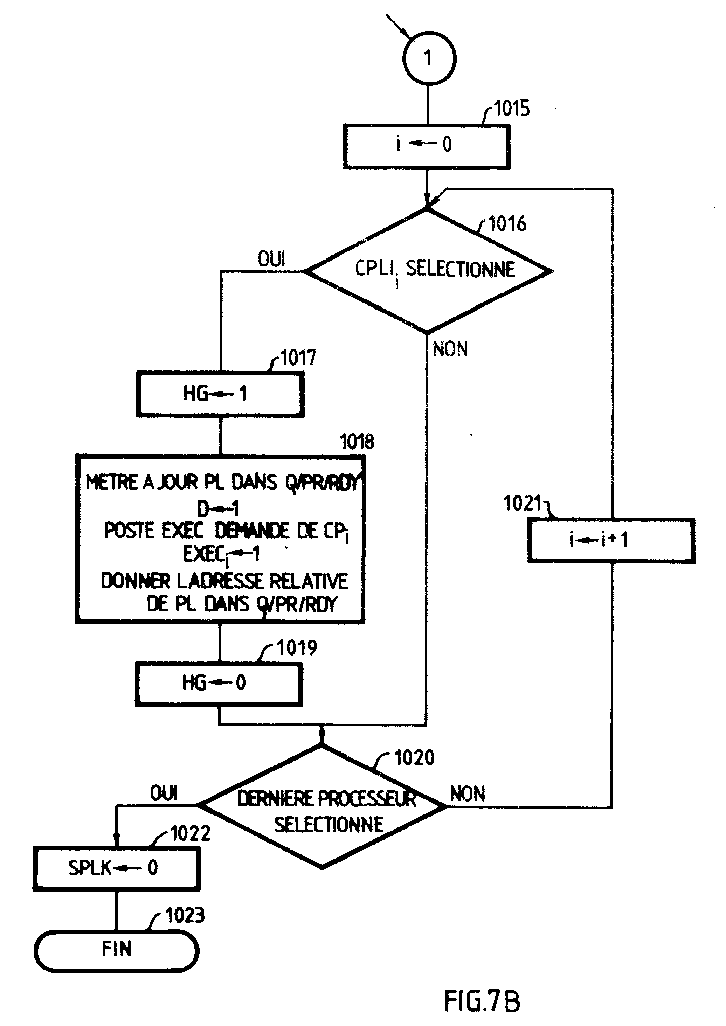

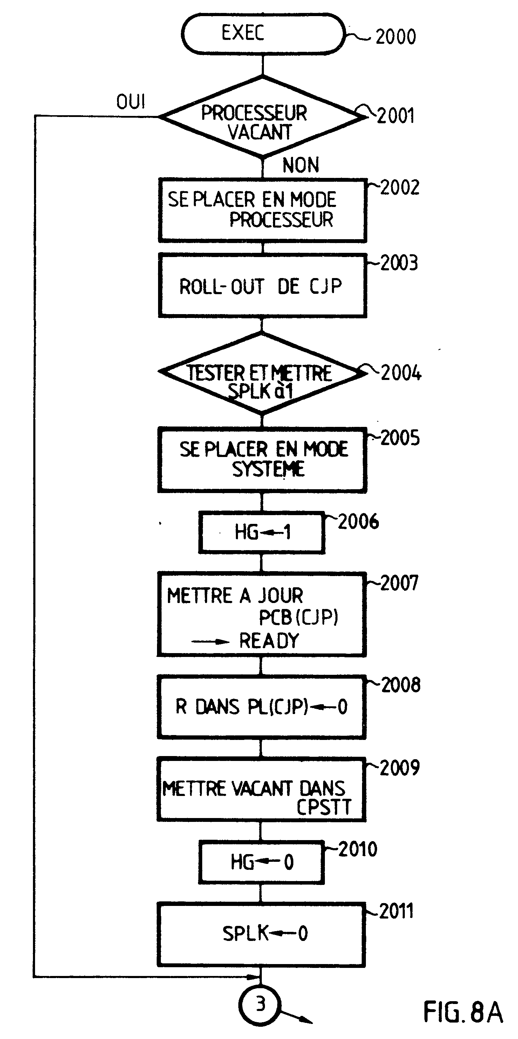

Le fonctionnement du dispatcher va maintenant être décrit à l'aide des figs 7A, 7B et 8A à 8C.

Les figs 7A et 7B montrent sous forme d'organigramme le fonctionnement du microprogramme mis en œuvre pour exécuter la fonction SELECT qui affecte les processeurs aux processus candidats. Ce microprogramme est stocké dans la mémoire de l'organe de commande OC 15 de la fig. 3A dans chaque processeur. Des détails sur la programmation de tels organes de commandes sont donnés dans le livre intitulé «Microprogramming principles and Practices» de Samir S. HUSSON, édité par Prentice Hall Inc. Englewood Cliffs, NJ. Le déroulement du microprogramme SELECT fait appel aux dispositifs matériels déjà décrits plus haut. L'opération SELECT consiste à choisir les processus qui peuvent être placés en exécution parmi tous les processus en attente. Cette opération est effectuée par le processeur qui apporte une modification dans l'état des processus du système. Cela peut se faire par exemple dans le cas où un processus est dans l'attente d'un message sur un sémaphore et que le processus en exécution sur un processeur $P_n$ apporte ce message, le processeur $P_n$ prendra à sa charge l'exécution de la fonction SELECT. Le fait d'apporter une modification dans l'état des processus se concrétise par la mise au niveau 1 logique du basculeur CONTEST par le processeur qui apporte la modification. La mise à 1 du basculeur CONTEST autorise le processeur qui a apporté la modification à exécuter la fonction SELECT. Le déroulement du microprogramme SELECT représenté à la fig. 7A consiste à effectuer un premier test du basculeur SPLK (étape 1001). Si le basculeur SPLK est au niveau 1 logique, le processeur regarde s'il y a un processus qui lui est affecté en vérifiant l'état de son registre BUSY (étape 1005). S'il est dans l'état BUSY, il exécute l'instruction suivante (étape 1006) et retourne à la fin de l'exécution de l'instruction au test du basculeur SPLK (étape 1001). Si l'état du basculeur SPLK est zéro, le processeur qui exécute SELECT le fait passer dans l'état 1 ce qui interdit l'accès aux sémaphores et aux tables de la mémoire $MMU_1$ par les autres processeurs du système. A l'étape 1003 un test est effectué sur l'état du compteur $\Sigma EXEC_i$. Si l'état de ce compteur est différent de 0, le basculeur SPLK est remis à zéro (étape 1004) et la fonction SELECT ne peut continuer à s'exécuter. Cela signifie encore que la fonction SELECT ne peut s'exécuter que si tous les processus candidats à l'exécution dans une phase précédente ont tous été attribués. Si l'état du compteur $\Sigma EXEC_i$ est nul, l'indicateur CONTEST est remis à zéro. A l'étape 1009 le processeur va chercher dans la base du système le mot IQW et un test est effectué sur le contenu de la zone de ce mot allant du bit 16 sur une longueur de 16. Si le contenu est vide, le basculeur SPLK est remis à zéro (étape 1011), s'il n'est pas nul l'attribution des processeurs aux processus candidats peut s'effectuer (étape 1013). L'algorithme utilisé pour définir la fonction d'attribution peut être variable. Il dépend en fait de l'importance des moyens de traitement du système. Toutefois, le programmeur pourra aisément choisir l'algorithme le mieux adapté en suivant les règles suivantes:

a) la sélection des processus doit s'effectuer en tenant compte des priorités des processus entre eux définies par l'ordre de priorité dans la file d'attente des processus prêts à l'exécution, pour cela on pourra se reporter utilement à la fig. 5.

b) Les processus déjà en exécution ne peuvent être sélectionnés. Une vérification de l'état des bits R et SU des liens de processus dans la file d'attente des processus prêts à l'exécution doit donc être effectuée.

c) Pour un processus en non exécution, le choix du processeur doit être fait parmi ceux qui ont des possibilités d'exécution de ce processus. Cette vérification doit porter sur l'état du masque CPMK.

d) L'algorithme doit permettre d'effectuer le choix parmi les processeurs à l'état BUSY et VACANT, dans le cas des processeurs à l'état BUSY le processeur qui sera choisi sera celui qui sera en train d'exécuter un processus de priorité inférieure à celle du processus candidat.

e) Lorsqu'un processus peut être attribué à plus d'un processeur, le choix devra être orienté vers celui qui a déjà travaillé avec ce processus. L'état du bit RHU situé dans les liens de processus devra être consulté.

Les résultats de l'affectation seront transmis dans les registres de travail du processeur de façon à associer le numéro du processeur sélectionné au numéro JP du processus qu'il doit exécuter.

L'opération d'affectation étant terminée le microprogramme SELECT procède alors à la mise à jour des files d'attente de la fig. 5 selon l'organigramme de la fig. 7B. L'étape 1016 vérifie les processeurs sélectionnés et l'étape 1018 consiste pour chaque processeur sélectionné à effectuer la mise à jour des liens de processus dans les files d'attente de la fig. 5, à incrémenter le compteur ΣEXEC d'une unité chaque fois qu'un processeur est sélectionné et à demander l'exécution de la fonction EXEC pour ce processeur.

Les figs 8A à 8C montrent le fonctionnement du microprogramme mis en œuvre pour l'exécution de la fonction EXEC pour chacun des processeurs sélectionnés.

Sur la fig. 8A, à l'étape 2001, le processeur sélectionné vérifie sont état qui peut être VACANT ou BUSY. S'il est à l'état BUSY, ce processeur est en train d'exécuter un processus qu'il doit arrêter et ranger dans la file d'attente de la fig. 5 et prendre en charge le nouveau processus qui vient de lui être affecté. A l'étape 2003 une séquence appelée ROLL OUT est exécutée, cette séquence consiste à effectuer un vidage de toutes les copies des registres du processeur et à effectuer la mise à jour du bloc de commande de processus PCB. Le basculeur SPLK est mis à 1 à l'étape 2004 par le processeur qui effectue la fonction EXEC ce qui interdit aux autres processeurs l'accès aux sémaphores aux files d'attente sur sémaphore et aux blocs de commande de processus.

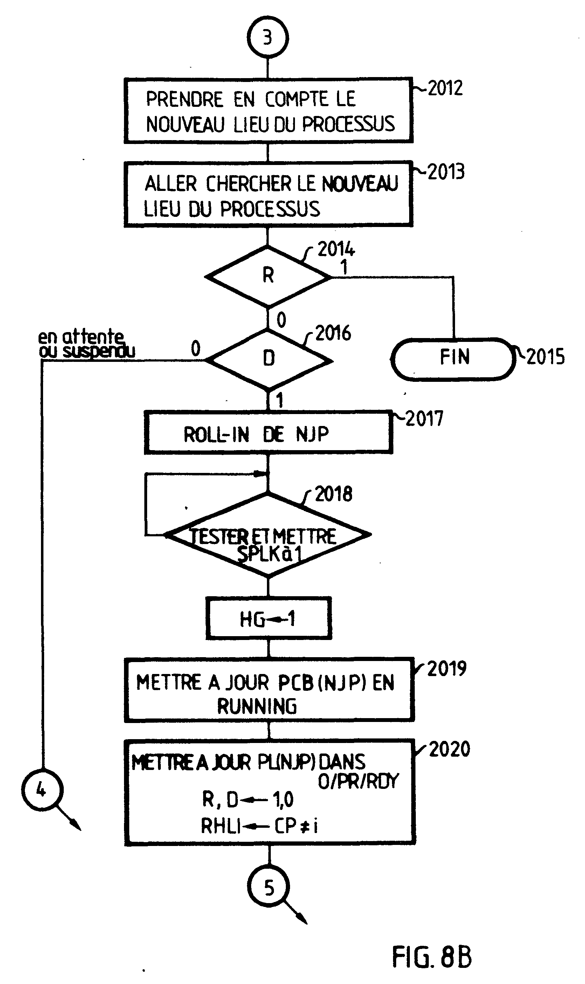

De même, le basculeur HG est mis à 1 pour alerter le système de diagnostic, des erreurs qu'une des opérations de mise à jour de tables critiques en mémoire est effectué. L'étape 2007 exécute la mise à jour du lien de processus correspondant au processus arrêté dans la file d'attente des processus prêts à l'exécution. Cette mise à jour consiste à placer le bit R du lien correspondant à zéro (étape 2008). L'étape 2008 effectue la mise à jour de la table des processeurs CPSTT en indiquant dans la zone CPST de cette table correspondant au processeur, la fonction EXEC que le processeur est «VACANT». Une fois que la mise à jour de ces tables est effectuée, le basculeur HG est remis à zéro (étape 2010) ainsi que le basculeur SPLK (étape 2011), le microprogramme continue alors en 3 à la fig. 8B. En revenant à l'étape 2001 si le test effectué fait apparaître que le processeur est dans l'état VACANT les étapes précédentes ne sont pas exécutées et le microprogramme continue au point 3 de la fig. 3B. Aux étapes 2012 et 2013, le lien de processus correspondant au processus choisi pour être exécuté est cherché dans la mémoire $MMU_1$ et chargé dans un des registres de travail du processeur.

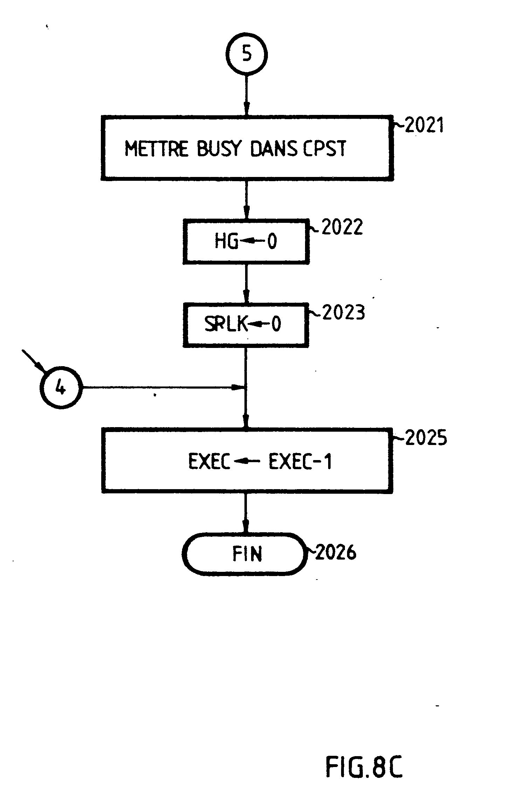

Le bit R du lien est testé à l'étape 2014. Dans le cas où le bit R est à 1, le processus correspondant au lien trouvé est encore en exécution sur un processeur, l'opération EXEC ne peut donc continuer, par contre, si le bit R est à zéro un test sur le bit D du lien est effectué. Si le bit D est à 1 les paramètres nécessaires au lancement du nouveau processus choisi sont chargés dans les registres du processeur à l'étape 2017, par contre si le bit D est nul, le processus sélectionné est dans l'un des deux états en attente ou suspendu; dans ce cas, le microprogramme continue au point 4 de la fig. 8C et le processeur devient VACANT. Lorsque l'étape 2017 est terminée, le basculeur SPLK est testé et mis à 1 si le résultat du test est un zéro et le basculeur HG est mis à 1 de façon à indiquer dans le mot d'état du bloc de commande de processus correspondant au processus qui vient d'être lancé que celui-ci prend l'état d'exécution, le lien correspondant dans la file d'attente de la fig. 5 est mis à jour en plaçant son bit R à 1, sont bit D à zéro et en écrivant dans la zone RHU le numéro du processeur sur lequel le processus est lancé. De même, la table CPSTT des processeurs est mise à jour à l'étape 2021 en plaçant l'indication BUSY dans le mot CPST correspondant au processeur exécutant la fonction EXEC. Les opérations de mise à jour étant terminées, les basculeurs HG et SPLK sont remis à zéro aux étapes 2022 et 2023. L'opération EXEC se termine en décrémentant le compteur $ΣEXEC_i$ d'une unité à l'étape 2025.

### Revendications

1. Système de traitement de l'information composé de plusieurs processeurs (CPU) individuels et au moins une mémoire (MMU) à laquelle chaque processeur est connectable par un système de voies de transmission ou bus (3), de moyens (MCU) associés au bus pour connecter sélectivement un processeur à la mémoire et de moyens (PRWM, PRSM) de mémorisation de l'affectation des processus aux processeurs, ledit système comprenant des moyens d'affectation de processus (JP) candidats à l'exécution entre plusieurs processeurs (CPU) caractérisé en ce que certains processeurs du système sont susceptibles d'être sélectionnés (SELECT) pour exécuter ladite affectation des processus (JP) candidats auxdits processeurs et comprennent des premiers moyens composés notamment d'un premier et de seconds moyens indicateurs, ledit premier moyen indicateur (CONTEST) étant représentatif d'un changement dans l'état des processus du système qui sont en attente d'une exécution ou dans l'état des processeurs en fonctionnement et autorisant dans ce cas le processeur qui a apporté la modification à exécuter ladite affectation des processus (JP) candidats aux processeurs du système à la condition que lesdits seconds moyens indicateurs (ΣEXECi, SPLK) indiquent qu'aucun processeur n'effectue déjà ladite affectation.

2. Système selon la revendication 1, caractérisé en ce que les seconds moyen indicateur comprennent un compteur (ΣEXECi) dont le contenu indique le nombre des opérations d'affectation des processus aux processeurs qui n'ont pas été terminées.

3. Système selon la revendication 1 ou 2, caractérisé en ce que le second moyen indicateur comprend des moyens de verrouillage contenant une bascule (SPLK) de verrouillage du système lorsqu'un processus est sélectionné.

4. Système selon la revendication 3, caractérisé en ce que lesdits moyens de verrouillage verouillent l'accès des zones de mémoire contenant les files d'attente des processus candidats lorsqu'une modification est apportée dans l'état desdits processus, de façon à ne réserver l'accès auxdites zones qu'au processeur effectuant la répartition des processus entre l'ensemble des processeurs du système.

5. Système selon l'une des revendications précédentes, caractérisé en ce que les premiers moyens comprennent en outre des moyens (NL, Fig. 6) de mise à jour des liens de processus desdites files d'attente chaque fois qu'un processus est attribué à un processeur du sytème.

6. Système selon l'une des revendications précédentes, caractérisé en ce qu'il comprend des moyens de vidage de l'état des registres de chaque processeur auquel a été affecté un processus candidat lorsque celui-ci est en train d'exécuter un autre processus, associé à des moyens de chargement dans les registres du processeur sélectionné des paramètres nécessaires à l'exécution du processus qui lui est affecté.

**Claims**

1. A data processing system comprising several individual processors (CPU) and at least one memory (MMU) to which each processor may be connected via a system of transmission channels or bus (3), means (MCU) associated with the bus for the selective connection of a processor to the memory and means (PRWM, PRSM) for storing the allocation of the processes to the processors, the said system comprising means for allocating processes (JP) candidates for implementation between several processors (CPU), characterised in that particular processors of the system are able to be selected (SELECT) to perform the said allocation of the candidate processes (JP) to the said processors and comprise first means formed in particular by first and second indicator means, the said first indicator means (CONTEST) representing a change in the state of the processes of the system which await implementation or in the state of the processors in operation and in this case authorising the processor which had provided the modification to implement the said allocation of the candidate processes (JP) to the processors of the system subject to the condition that the said second indicator means (ΣEXECi, SPLK) indicate that the said allocation is not already being performed by any processor.

2. System according to claim 1, characterised in that the second indicator means comprise a counter (ΣEXECi) of which the contents indicate the number of operations of allocation of the processes to the processors which have not been completed.

3. System according to claim 1 or 2, characterised in that the second indicator means comprises locking means containing a bistable device (SPLK) for locking of the system when a processor is selected.

4. System according to claim 3, characterised in that the said locking means block access to the memory zones containing the queueing lines of the candidate processes when a modification is caused in the state of the said processes, in such a manner that access to the said sections is reserved only for the processor performing the distribution of the processes between the totality of the processors of the system.

5. System according to any of the preceding claims, characterised in that the first means also comprise means (NL, Fig. 6) for displaying the process interlinkages of the said queueing lines each time a process is allocated to a processor of the system.

6. System according to any of the preceding claims, characterised in that it comprises means for emptying the state of the registers of each processor to which a candidate process has been allocated, once the same is in course of implementing another process, associated with means for loading the registers of the processor selected with the parameters required for implementation of the process which is allocated to it.

**Patentansprüche**

1. System zur Informationsverarbeitung, gebildet aus mehreren einzelnen Prozessoren (CPU) und wenigstens einem Speicher (MMU), mit welchem jeder Prozessor verbindbar ist über ein System von Übertragungsleitungen bzw. einen Bus (3), dem Bus zugeordneten Mitteln (MCU) zur selektiven Verbindung eines Prozessors mit dem Speicher und Mitteln (PRWM, PRSM) zur Speicherung der Zuordnung der Prozesse zu den Prozessoren, wobei das System ferner Mittel zur Zuweisung von auszuführenden Prozessen (JP) zwischen mehreren Prozessoren (CPU) umfasst, dadurch gekennzeichnet, dass bestimmte Prozessoren des Systems auswählbar sind (SELECT), um die genannte Zuweisung von auszuführenden Prozessen (JP) zu den Prozessoren durchzuführen, und erste Mittel umfassen, welche insbesondere aus einem ersten sowie aus einem zweiten Anzeigemittel zusammengesetzt sind, wobei das erste Anzeigemittel (CONTEST) repräsentativ ist für eine Änderung des Zustands der auf eine Ausführung wartenden Prozesse des Systems oder des Zustandes der in Betrieb befindlichen prozessoren und in diesem Falle denjenigen Prozessor, der die Veränderung herbeigeführt hat, autorisiert, die genannte Zuweisung der auszuführenden Prozesse (JP) zu den Prozessoren des Systems auszuführen, unter der Bedingung, dass die genannten zweiten Anzeigemittel (ΣEXECi, SPLK) anzeigen, dass kein Prozessor bereits diese Zuweisung durchführt.

2. System nach Anspruch 1, dadurch gekennzeichnet, dass die zweiten Anzeigemittel einen Zähler (ΣEXECi) umfassen, dessen Inhalt die Anzeige von Zuweisungsoperationen von Prozessen zu Prozessoren anzeigt, die noch nicht beendet sind.

3. System nach Anspruch 1 oder 2, dadurch gekennzeichnet, dass das zweite Anzeigemittel Einrastmittel umfasst, die eine Kippschaltung (SPLK) zur Einrastung des Systems, wenn ein Prozessor ausgewählt ist, enthalten.

4. System nach Anspruch 3, dadurch gekennzeichnet, dass die genannten Einrastmittel den Zugang der Speicherzonen verriegeln, welche die Warteschlangen für die auszuführenden Prozesse enthalten, wenn eine Veränderung des Zustandes der genannten Prozesse herbeigeführt wurde, so dass der Zugang zu den genannten Zonen nur für denjenigen Prozessor reserviert bleibt, welcher die Verteilung der Prozesse unter der Gesamtheit von Prozessoren des Systems durchführt.

5. System nach einem der vorstehenden Ansprüche, dadurch gekennzeichnet, dass die ersten Mittel ferner Mittel (NL, Fig. 6) zur Auffrischung der Prozessverbindungen der genannten Warteschlangen jedesmal, wenn ein Prozess einem Prozessor des Systems zugewiesen wird, umfassen.

6. System nach einem der vorstehenden Ansprüche, dadurch gekennzeichnet, dass es Entleerungsmittel für den Registerzustand der Register jedes Prozessors enthält, dem ein auszuführender Prozess zugewiesen wurde, wenn dieser im Begriff ist, einen anderen Prozess auszuführen, zugeordnet zu Lademitteln, um in die Register des ausgewählten Prozessors Parameter zu laden, welche für die Ausführung des ihm zugewiesenen Prozesses erforderlich sind.

FIG.1

| PRIORITE | | ETAT | PMW |
| DCN | STWA (ASW) | | |
| T (SKW) | | | SKW |
| IC (ICW) | | | |
| PRHM | PRSM | | |
| ZONE DE SAUVEGARDES DES REGISTRES | | | |

FIG.2

FIG.3A

0 030 504

FIG.3B

0 030 504

FIG.3C

FIG.4

FIG.6

FIG.5

FIG.7A

```
                           ( 1 )
                             │
                             ▼
                  ┌──────────────────┐  ╭1015
                  │      i ← 0        │
                  └──────────────────┘
                             │
                             ▼
                        ╱─────────╲  ╭1016
            OUI       ╱  CPLI SELECTIONNE ╲
        ┌────────────◄      i              ►
        │             ╲                 ╱
        │              ╲───────────────╱
        │                     │ NON
        ▼                     │
  ┌──────────────┐ ╭1017      │
  │    HG ← 1     │           │
  └──────────────┘           │
        │                     │
        ▼              1018   │
  ┌────────────────────────┐ │
  │ METTRE A JOUR PL DANS  │ │
  │      QVPR/RDY          │ │          ┌──────────────┐ ╭1021
  │        D ← 1           │ │          │   i ← i + 1   │
  │ POSTE EXEC DEMANDE DE  │ │          └──────────────┘
  │        CPi             │ │                  ▲
  │      EXECi ← 1         │ │                  │
  │ DONNER LADRESSE        │ │                  │
  │ RELATIVE DE PL DANS    │ │                  │
  │      QVPR/RDY          │ │                  │
  └────────────────────────┘ │                  │
        │                     │                  │
        ▼              ╭1019  │                  │
  ┌──────────────┐            │                  │
  │    HG ← 0     │           │                  │
  └──────────────┘           │                  │
        │                     │                  │
        └───────────┬─────────┘                  │
                    ▼                             │
               ╱─────────╲  ╭1020                 │
      OUI    ╱  DERNIERE   ╲    NON               │
    ┌───────◄  PROCESSEUR   ►───────────────────┘
    │        ╲ SELECTIONNE ╱
    │         ╲───────────╱
    ▼
┌──────────────┐ ╭1022
│   SPLK ← 0   │
└──────────────┘
    │
    ▼    ╭1023
 ╭──────────╮
 │   FIN    │
 ╰──────────╯
```

FIG.7B

```
            ┌──────────────┐
            (    EXEC      )───── 2000
            └──────────────┘
                    │
  OUI          ╱─────────╲
 ┌────────────< PROCESSEUR >───── 2001
 │             ╲  VACANT  ╱
 │              ╲───────╱
 │                  │ NON
 │         ┌──────────────────┐
 │         │ SE PLACER EN MODE │──── 2002
 │         │   PROCESSEUR      │
 │         └──────────────────┘
 │                  │
 │         ┌──────────────────┐
 │         │ ROLL-OUT DE CJP   │──── 2003
 │         └──────────────────┘
 │                  │
 │            ╱──────────╲
 │           < TESTER ET   >──── 2004
 │           < METTRE SPLK à1>
 │            ╲──────────╱
 │                  │
 │         ┌──────────────────┐
 │         │ SE PLACER EN MODE │──── 2005
 │         │    SYSTEME        │
 │         └──────────────────┘
 │                  │
 │            ┌──────────┐
 │            │ HG ← 1   │──── 2006
 │            └──────────┘
 │                  │
 │         ┌──────────────────┐
 │         │ METTRE A JOUR     │──── 2007
 │         │    PCB (CJP)      │
 │         │   → READY         │
 │         └──────────────────┘
 │                  │
 │         ┌──────────────────┐
 │         │ R DANS PL(CJP)← 0 │──── 2008
 │         └──────────────────┘
 │                  │
 │         ┌──────────────────┐
 │         │ METTRE VACANT DANS│──── 2009
 │         │    CPSTT          │
 │         └──────────────────┘
 │                  │
 │            ┌──────────┐
 │            │ HG ← 0   │──── 2010
 │            └──────────┘
 │                  │
 │         ┌──────────────────┐
 │         │   SPLK ← 0        │──── 2011
 │         └──────────────────┘
 │                  │
 └──────────────────┤
                    │
                  ( 3 )
```

FIG. 8A

③

PRENDRE EN COMPTE LE NOUVEAU LIEU DU PROCESSUS ~2012

ALLER CHERCHER LE NOUVEAU LIEU DU PROCESSUS ~2013

2014

R

1

0

en attente ou suspendu

0

2016

D

FIN ~2015

1

ROLL-IN DE NJP ~2017

2018

TESTER ET METTRE SPLK à 1

HG←1

METTRE A JOUR PCB(NJP) EN RUNNING ~2019

④

METTRE A JOUR PL(NJP) DANS O/PR/RDY ~2020

R, D ← 1,0

RHLI ← CP ≠ i

⑤

FIG. 8B

FIG.8C